(19) Europäisches Patentamt
European Patent Office
Office européen des brevets

(11) **EP 2 214 364 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(51) Int Cl.:
***H04L 27/12*** *(2006.01)*

(21) Anmeldenummer: **09180070.6**

(22) Anmeldetag: **21.12.2009**

(54) **Frequenzumtastung-Sendemodul**

FSK transmission module

Module d'émission MDF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.02.2009 DE 102009000569**

(43) Veröffentlichungstag der Anmeldung:
**04.08.2010 Patentblatt 2010/31**

(73) Patentinhaber: **Biotronik CRM Patent AG 6341 Baar (CH)**

(72) Erfinder: **Lang, Martin 91085, Weisendorf (DE)**

(74) Vertreter: **Galander, Marcus et al Biotronik SE & Co. KG Corporate Intellectual Properties Woermannkehre 1 12359 Berlin (DE)**

(56) Entgegenhaltungen:
**GB-A- 2 354 649          US-A1- 2003 118 143
US-A1- 2006 261 906          US-A1- 2008 095 269**

## Beschreibung

Die Erfindung betrifft ein Sendemodul, welches insbesondere für implantierbare medizinische Geräte geeignet ist und eine Datenübertragung durch Frequenzmodulation eines Trägersignals mit einer Trägerfrequenz erlaubt.

Üblicherweise erfolgt die Übertragung insbesondere binär codierter Daten - im Folgenden auch als Nutzsignale bezeichnet - indem ein Trägersignal durch Frequenzumtastung frequenzmoduliert wird. Diese Modulation ist auch als Frequency Shift Keying (FSK) bekannt.

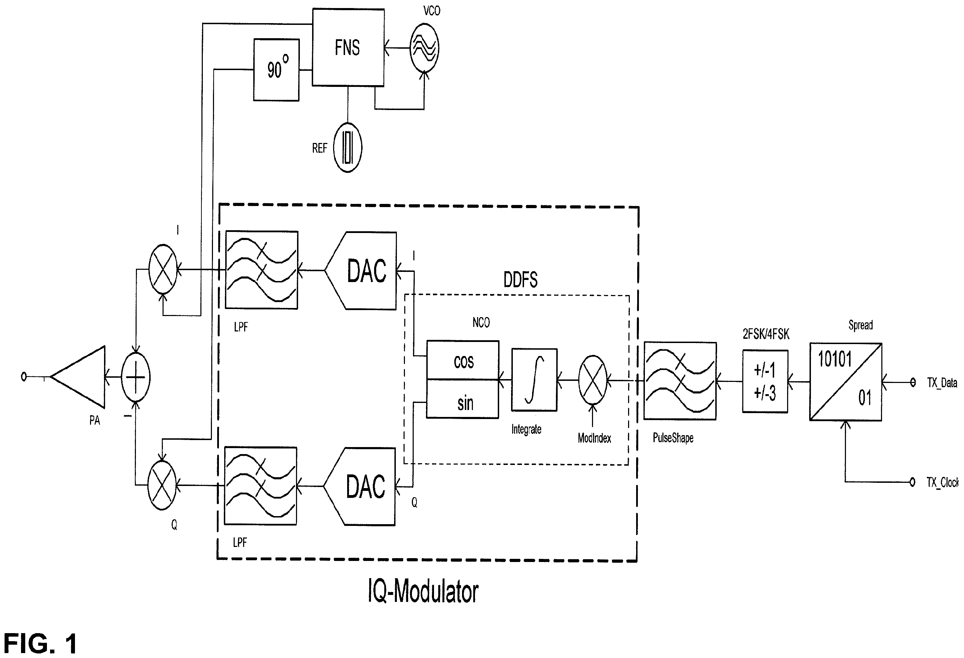

Fig. 1 zeigt schematisch einen Standardsender für die FSK-Modulation einer Trägerfrequenz. Der Sender besitzt eine direkte digitale Frequenzsynthese (Direct Digital Frequency Synthesizer (DDFS)), um den Realteil (Inphase, I) und den Imaginärteil (Quadraturphase, Q) für eine komplexe Aufwärtskonversion des Trägersignals mittels einer Phase-Locked Loop Schaltung (PLL; Nachlaufsynchronisationsschaltung) durchzuführen. Der PLL-Schaltkreis besitzt einen Frequenzteiler, mit dem aus einer Vergleichsfrequenz $f_{ref}$, eine um den Faktor N höherfrequente Ausgangsfrequenz erzeugt wird. Mit einem Fraktional-N-Synthesizer (FNS) kann die Ausgangsfrequenz auch um ein nicht ganzzahliges N über der Vergleichsfrequenz liegen. Die Phase-Locked Loop weist im Übrigen einen spannungsgesteuerten hochfrequenten Oszillator (Voltage-Controlled Oscillator: VCO) auf, der über einen Phasenvergleicher auf eine stabile genaue Referenzphase der Vergleichsfrequenz $f_{ref}$ geregelt wird. Die Vergleichsfrequenz $f_{ref}$ wird beispielsweise durch einen Quarzoszillator bereitgestellt; siehe Fig. 1 oben.

Wie Fig. 1 zu entnehmen ist, wird das Ausgangssignal der PLL zum einen ohne Phasenverschiebung (Realteil, Inphase, I) und zum anderen mit einer Phasenverschiebung um 90° ausgegeben. Realteil und Imaginärteil (Quadraturphase, Q) des Trägersignals werden dann jeweils separat moduliert (IQ-Modulation) und anschließend zu dem Ausgangssignal des Direct Digital Frequency Synthesizers aufaddiert.

Eine derartige Schaltung ermöglicht eine genaue und stabile FSK-Modulation, hat aber einige Nachteile: Sie benötigt zwei schnelle Digital-Analog-Umsetzer (DAC) und zwei Hochfrequenzmischer. Die Schaltung nimmt eine nicht unbeachtliche Fläche ein, einschließlich der erforderlichen Tabellen für die Sinus- und Kosinustransformation. Die beiden digitalen Digital-Analog-Umsetzer und die beiden HF-Mischer verbrauchen einen signifikanten Anteil der Gesamtenergie zum Betreiben des Senders, nämlich zwischen 15 und 20 %. Der Direct Digital Frequency Synthesizer generiert außerdem zusätzliches Rauschen und Störsignale. Die Schaltungszweige für den Realteil und den Imaginärteil müssen hinsichtlich Phase und Amplitude gut abgestimmt sein, um Spiegelfrequenzsignale zu unterdrücken. Die beiden letztgenannten Effekte zusammen machen es schwieriger, die Vorschriften der Regulierungsbehörden bezüglich unerwünschter Ausstrahlungen des Senders zu erfüllen.

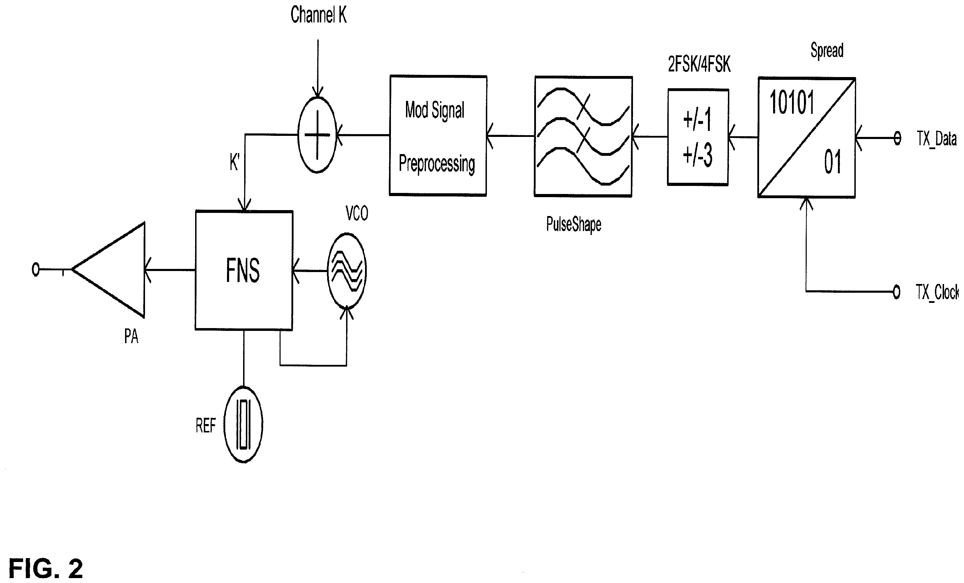

Eine Modulation durch direkte Frequenzumtastung (DFSK, Direct FSK) wird erzielt, indem das Kanalsteuersignal des Fraktional-N-Synthesizers (FNS) verändert wird, d.h. dass die Modulationsinformation direkt dem Basiskanal hinzugefügt wird, so dass eine binäre Pulsfolge des zu übertragenden Nutzsignals das hochfrequente Trägersignal direkt, d.h. ohne Zwischenträger, moduliert. Eine entsprechende Schaltung ist in Fig. 2 abgebildet. Während diese Schaltung alle Probleme der IQ-Modulation vermeidet, besitzt sie eigene Probleme. Das Einschwingverhalten des FNS stört das Modulationsmuster in einer Art und Weise, die nicht einfach bzw. analytisch umgekehrt werden kann. Analogkomponenten, wie beispielsweise das Schleifenfilter und der spannungsgesteuerte Oszillator (VCO), sind möglicherweise nicht stabil über die Zeit, wechselnde Temperaturen oder verschiedene Produktionschargen und beeinträchtigen daher ebenfalls das Modulationsmuster. Die Auswahl von FNS-Schleifenparametern ist begrenzt, weil eine PLL-Schleifenbandbreite weit unterhalb der Datenrate ein Gaussian-Minimum-Shift-Keying(GMSK)-artiges Modulationsverhalten verursacht (das jedoch in einigen Anwendungen wünschenswert sein kann).

Die Grundansätze zum Lösen dieser Probleme sind: Eine große PLL-Bandbreite, um die Wirkung der PLL-Dynamik zu minimieren, eine feste Modulationsvorverstärkung, die die berechnete oder geschätzte PLL-Übertragungsfunktion invertiert, und eine VCO-Rückkopplung, um die Modulationsverstärkung nach Art einer geschlossenen Regelschleife zu regeln.

Eine große Bandbreite des FNS jenseits der Bandbreite, die für ein ausreichend schnelles Einschwingen erforderlich ist, erfordert teure und schwierige Maßnahmen, um den Pegel des FNS-Rauschens und der Störsignale niedrig zu halten. Eine feste Verstärkung kann offensichtlich keine Variationen über die Zeit, der Temperatur und der Produktionschargen ausgleichen. Eine Rückkopplung des VCO erfordert grundsätzlich eine Art von "Empfänger"- und Demodulatorschaltung, welche gemäß bekannter Ansätze FM-Demodulatoren einschließt, die nicht unter allen Umständen arbeiten, und/oder analoge Komponenten und/oder Schätzungen einer Übertragungsfunktion.

US 2003/0118143 A1 offenbart eine Schaltung für eine direkte Multi-Modulus-Modulation der Phase/Amplitude für die Verwendung in einem Sender/Empfänger.

US 2008/0095269 A1 beschreibt ein Verfahren und System für digitales Tracking in der direkten und polaren Modulation.

US 2006/0261906 A1 offenbart ein Modulationsverfahren und -Vorrichtung in einer PLL-Schaltung.

Aufgabe der Erfindung ist es, ausgehend von diesem Stand der Technik ein Sendemodul mit FSK-Modulator zu schaffen, der es erlaubt, die verfügbare Bandbreite gut und ohne Störsignale auszunutzen, ohne einen allzu großen Aufwand zu erfordern.

Erfindungsgemäß wird diese Aufgabe durch ein Sendemodul zum Übertragen von Daten in Form digitaler Nutzsignale durch Nutzsignale bestimmter Modulation eines Trägersignals mittels zwei- oder mehrstufiger Frequenzumtastung, gelöst. Das Sendemodul enthält: einen PLL-Schaltkreis mit einem spannungsgesteuerten Oszillator (20) und einem steuerbaren Frequenzteiler (24) mit einem Frequenzteilersteuereingang, wobei der PLL-Schaltkreis einen ersten Fraktional-N-Synthesizer (10) bildet; eine Kalibratorschaltung (40); eine Vorverzerrungs-Einheit (62), wobei das Sendemodul ausgebildet ist, eine direkte Frequenzumtastung (DFSK) des Trägersignals durch entsprechende Ansteuerung des Frequenzteilers (24) mit einem Frequenzteilersteuersignal zu bewirken. Das Sendemodul ist dadurch gekennzeichnet, dass das Sendemodul eine Modulationsdatenvorverarbeitungseinheit aufweist, die mit dem Frequenzteilersteuereingang verbunden und ausgebildet ist, Abtastwerte gleicher Polarität der zu übertragenden Nutzsignale zu wichten und das Frequenzteilersteuersignal, d. h. den Modulationsindex hinsichtlich des zu bewirkenden Frequenzhubs der Nutzsignale zu feinabzustimmen, wobei die Kalibratorschaltung (40) dazu ausgebildet ist, zumindest ein erstes Steuersignal $(W\!\rightarrow)$ und ein zweites Steuersignal (dM) zu erzeugen, und die Vorverzerrungs-Einheit (62) dazu ausgebildet ist, aus dem ersten Steuersignal $(W\!\rightarrow)$, dem zweiten Steuersignal (dM) und den Nutzdaten oder aufbereiteten Nutzsignalen ein Korrektursignal (dK') zu erzeugen, wobei das Sendemodul dazu ausgebildet ist, das Korrektursignal (dK') einem Steuereingang (18) des Fraktional-N-Synthesizers (10) zuzuführen.

Vorzugsweise bildet der PLL-Schaltkreis einen ersten Fraktional-N-Synthesizer 10. Er besitzt hierzu vorzugsweise einen Frequenzteiler 24, der als Multi-Modulus-Frequenzteiler ausgebildet ist und somit auch nicht ganzzahlige Vielfache der Vergleichsfrequenz zulässt.

Dieser PLL-Schaltkreis besitzt einen Signalausgang 12 zum Ausgeben eines modulierten Ausgangssignals, also desjenigen Signals, das gegebenenfalls verstärkt gesendet werden soll. An diesen Signalausgang ist vorzugsweise eine Kalibratorschaltung 40 angeschlossen, die ausgebildet ist, aus einem jeweiligen modulierten Ausgangssignal Wichtungen für Abtastwerte eines jeweils zu übertragenden Nutzsignals sowie Korrekturwerte für das jeweilige Frequenzteilersteuersignal abzuleiten.

Hierzu weist die Kalibratorschaltung 40 vorzugsweise einen Testempfänger 42 auf, der als unmodulierter Fraktional-N-Synthesizer mit offener Regelschleife ausgebildet ist (Open Loop Fraktional-N-Synthesizer). Dieser Testempfänger weist vorzugsweise einen Frequenzteiler 54 auf, der in seiner Wirkung dem Frequenzteiler 24 des ersten Fraktional-N-Synthesizers entspricht sowie einen Phasen-Frequenz-Detektor 55, der in seiner Wirkung dem Phasen-Frequenz-Detektor 26

des ersten Fraktional-N-Synthesizers entspricht.

Weiterhin weist die Kalibratorschaltung 40 vorzugsweise eine Kalibrationseinheit 44 auf, die mit einem Ausgang des Testempfängers verbunden und ausgebildet ist, Wichtungen für Abtastwerte eines jeweils zu übertragenden Nutzsignals sowie Korrekturwerte für das jeweilige Frequenzsteuersignal zu bilden. Hierzu kann die Kalibrationseinheit 44 so gestaltet sein, dass sie beispielsweise einen Least Mean Square (LMS)-Algorithmus für adaptive Filter verwirklicht.

Weitere bevorzugte Ausführungsvarianten ergeben sich durch Kombination der hier explizit erwähnten Ausführungsvarianten sowie aus der nachfolgenden Beschreibung eines Ausführungsbeispiels.

Die Erfindung soll nun anhand eines Ausführungsbeispiels mit Bezug auf die Figuren näher erläutert werden. Von diesen zeigen:

Fig. 1:          Einen Direct Digital Frequency Synthesizer gemäß dem Stand der Technik;

Fig. 2:          eine Schaltung zur Modulation eines Trägersignals durch direkte Frequenzumtastung (DFSK) gemäß dem Stand der Technik;

Fig. 3:          ein Sendemodul gemäß der vorliegenden Erfindung; und

Fig. 4a und 4b:          Beispiele für Signalverläufe im Falle eines unkalibrierten (Fig. 4a) und eines kalibrierten (Fig. 4b) Steuersignals.

Die Figuren 1 und 2 wurden bereits in der Beschreibungseinleitung erläutert.

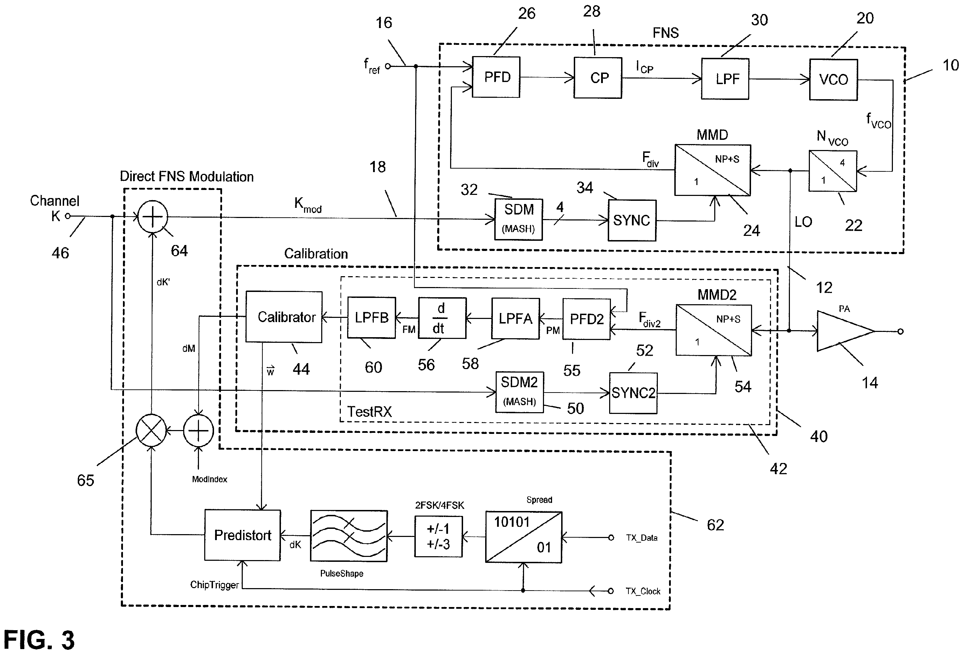

Fig. 3 zeigt ein erfindungsgemäßes Sendemodul. Dieses besitzt einen Fraktional-N-Synthesizer FNS 10, wie er oben rechts in Fig. 3 dargestellt ist. Dieser Fraktional-N-Synthesizer 10 besitzt einen Signalausgang 12 für das modulierte Ausgangssignal, welches anschließend nur noch durch einen Ausgangsverstärker 14 verstärkt zu werden braucht. Außerdem besitzt der Fraktional-N-Synthesizer 10 einen ersten Eingang 16 für eine Vergleichsfrequenz $f_{ref}$ sowie einen Steuereingang 18 für ein Frequenzteilersteuersignal.

Neben dem Fraktional-N-Synthesizer FNS 10 besitzt das Sendemodul Schaltungen zur Vorverarbeitung der Modulationsdaten (in Figur 3 unterhalb des Fraktional-N-Synthesizer FNS 10 dargestellt und weiter unten näher beschrieben). Diese Schaltungen kompensieren das dynamische Verhalten des Fraktional-N-Synthesizer FNS 10 sowie die Bauteiltoleranzen auf zweierlei Art und Weise: a) eine Vorverzerrung der Modulationsdaten (d.h. des Nutzsignals) durch Wichten (skalieren) der einzelnen Abtastwerte über ein oder mehrere Symbole (Impulse) gleicher Polarität, um das Einschwingverhalten des Fraktional-N-Synthesizer FNS 10 zu glätten, und b) ein definierter Korrekturfaktor für den Modulationsindex bzw. den Frequenzhub, der durch das Frequenzteilersteuersignal bewirkt wird, um die belegte Bandbreite zu kontrollieren.

Die Figur 3 in der Mitte dargestellte Schaltung enthält einen Testempfänger 42 und eine Kalibrationseinheit 44, die zusammen die Wichtungen und den Korrekturfaktor für das Frequenzteilersteuersignal bestimmen.

Der Fraktional-N-Synthesizer 10 gemäß Fig. 3 stellt einen an sich bekannten FrequenzSynthesizer in Form einer Nachlaufsynchronisationsschaltung (PLL-Schaltung) dar und besitzt nach üblicher Manier einen spannungsgesteuerten Oszillator (VCO) 20, dessen Ausgang, sofern der VCO auf einer höheren als der gewünschten Trägerfrequenz arbeitet, mit einem ersten, fest eingestellten Frequenzteiler $N_{VCO}$ 22 verbunden ist. Dieser wiederum liefert ein Eingangssignal für einen steuerbaren Multi-Modulus-Frequenzteiler MMD 24, dessen Ausgangssignal einem Phasendetektor (Phasen-Frequenz-Detektor PFD) 26 zugeführt wird, der gleichzeitig mit dem Eingang für die Vergleichsfrequenz $f_{ref}$ verbunden und ausgebildet ist, in an sich bekannter Manier die Phasenlage des Ausgangssignals des Multi-Modulus-Frequenzteilers MMD 24 mit der Phasenlage der Vergleichsfrequenz zu vergleichen und ein entsprechendes Ausgangssignal zu liefern. Dieses Ausgangssignal des Phasen-Frequenz-Detektors 26 wird über eine Ladungspumpe CP 28 und ein Tiefpassfilter LPF 30 als Schleifenfilter wiederum dem spannungsgesteuerten Oszillator VCO 20 zugeführt.

Die Frequenzumtastung des Fraktional-N-Synthesizers erfolgt durch ein Frequenzteilersteuersignal, mit dem das Frequenzteilerverhältnis des Multi-Modulus-Frequenzteilers MMD 24 gesteuert werden kann. Der Frequenzteilersteuereingang des Multi-Modulus-Frequenzteilers MMD 24 ist über einen Sigma-Delta-Modulator 32 und einen Synchronisator 34 mit dem Frequenzteilersteuereingang des Multi-Modulus-Frequenzteilers MMD 24 verbunden. Dem Steuereingang 18 des Fraktional-N-Synthesizers 10 wird ein korrigiertes Frequenzteilersteuersignal zugeführt, das zum einen durch eine Wichtung der Abtastwerte des Nutzsignals und zum anderen um einen entsprechenden Korrekturfaktor für den Frequenzhub derart korrigiert ist, dass Schwankungen über die Zeit, beispielsweise infolge von Temperaturdrift oder Schwankungen über verschiedene Produktionschargen, ausgeglichen werden.

Hierzu ist eine Kalibratorschaltung 40 vorgesehen, die eingangsseitig mit dem Signalausgang des Fraktional-N-Synthesizers 10 verbunden ist und die einen Testempfänger 42 sowie eine Kalibrationseinheit 44 aufweist.

Der Testempfänger 42 ist als Fraktional-N-Synthesizer mit offener Regelschleife ausgebildet und besitzt einen Eingang, der mit einem Kanalsteuereingang 46 des Sendemoduls verbunden ist. Ein über den Kanalsteuereingang 46 empfangenes Kanalsteuersignal wird zunächst einem Sigma-Delta-Modulator SDM2 50 des Testempfängers 42 zugeführt, der über einen Synchronisator 52 ein Frequenzteilersteuersignal für einen Multi-Modulus-Frequenzteiler MMD2 54 des Testempfängers 42 generiert. Dieses ist nicht moduliert, während das Frequenzsteuersignal des ersten Multi-modulus-Frequenzteilers MMD 24 des Fraktional-N-Synthesizers 10 entsprechend der zu übertragenden Daten (also entsprechend dem Nutzsignal) moduliert ist.

Ein zweiter Eingang des Multi-Modulus-Frequenzteiler MMD2 54 des Testempfängers 42 ist mit dem Signalausgang 12 des Fraktional-N-Synthesizers 10 verbunden. Dem Multi-Modulus-Frequenzteiler MMD2 54 des Testempfängers 42 ist ein Phasendetektor PFD2 55 nachgeschaltet, dessen Ausgangssignal Informationen über die Phasenmodulation des spannungsgesteuerten Oszillators VCO 20 des Fraktional-N-Synthesizers 10 enthält. Diese Phaseninformation wird durch ein digitales Differenzierglied d/dt 56 in Frequenzinformation gewandelt. Dem digitalen Differenzierglied d/dt 56 ist ein erstes Tiefpassfilter LPFA 58 vor- und ein zweites Tiefpassfilter LPFB 60 nachgeschaltet. Beide Tiefpassfilter sind digitale Tiefpassfilter erster Ordnung und bewirken eine Unterdrückung der von dem Sigma-Delta-Modulatoren SDM 32 und SDM2 50 stammenden Störsignale.

Auf die beschriebene Weise stellt der Testempfänger 42 einen rein digitalen FM-Empfänger dar, der für jeden Kanal des Fraktional-N-Synthesizers auf die gleiche Art und Weise arbeitet und jeden gewünschten Frequenzhub demoduliert. Das demodulierte FM-Signal am Ausgang des Testempfängers 42 enthält alle Ungenauigkeiten der direkten Modulation durch den Fraktional-N-Synthesizer 10 und kann daher dazu benutzt werden, diese Modulation zu kalibrieren. Das Ausgangssignal des ersten Tiefpassfilters LPFA 58 kann - beispielsweise um den Faktor 8 - heruntergetastet werden, um Rechenleistung zu sparen.

Aufgabe des Testempfängers 42 ist es, das Ausgangssignal des spannungsgesteuerten Oszillators VCO 20 frequenzzudemodulieren. Dabei kann das Ausgangssignal des spannungsgesteuerten Oszillators VCO 20 im GHz-Bereich liegen. Der Testempfänger 42 vermeidet eine direkte Demodulation bei solch hohen Frequenzen und umgeht die Notwendigkeit eines Überlagerungsempfängers (Heterodyne-Empfänger). Einfaches Herunterteilen würde zu Frequenzhüben führen, die mittels digitaler FSK-Demodulation schwer zu detektieren wären und die für jeden Kanal jeweils in einer anderen Basisfrequenz liegen würden. Das hier vorgestellte Sendemodul umgeht all diese Probleme mit dem zuvor vorgestellten Testempfänger 42.

An den Ausgang des zweiten Tiefpassfilters LPFB 60 des Testempfängers 42 ist die Kalibrationseinheit 44 angeschlossen. Diese kann grundsätzlich auf verschiedene Weise ausgeführt sein, je nachdem welche Toleranzen der analogen Komponenten innerhalb der verschiedenen Produktionschargen zu erwarten sind oder welche Temperaturvariationen zu erwarten sind oder wie streng die Bandbreite einzuhalten ist.

Generell kann die Kalibrationseinheit 44 ausgebildet sein, die Wichtungen mittels eines vereinfachten Least-Mean-Square-Algorithmus' (LMS-Algorithmus) für adaptive Filter zu bestimmen. Hierbei wird ein Fehlermaß berechnet, beispielsweise die Fläche zwischen gemessenen Modulationssignalformen und der idealen Signalform, und anschließend werden die Wichtungen der Abtastwerte um kleine Inkremente oder Dekremente so variiert, dass die Flächendifferenz minimal wird. Dabei kann die Flächendifferenz einfach dadurch bestimmt werden, dass die Differenzen zwischen den einzelnen gemessenen und idealen Abtastwerten aufsummiert werden.

Unter annähernd stabilen Bedingungen kann die Kalibrationseinheit 44 auch so ausgeführt sein, dass die Wichtungen der Abtastwerte fest einprogrammiert werden - beispielsweise in der später noch beschriebenen Vorverzerrungs-Einheit 62 - so dass nur noch die maximale FM-Abweichung gelegentlich geprüft werden muss, um den Korrekturfaktor für das Frequenzteilersteuersignal (Frequenzmodulation) zu adjustieren. Unter sehr stabilen Bedingungen kann der Korrekturwert für das Frequenzteilersteuersignal nach jeder Übertragung adjustiert werden und die Wichtungen der Abtastwerte könnten während der Übertragung kontinuierlich nachgeführt werden. Gesonderte Kalibrationszyklen sind dann nicht nötig.

Eine vorläufige Bestimmung der Wichtungen kann beispielsweise werksseitig für jedes einzelne Sendemodul, beispielsweise mittels eingebauter Algorithmen und/oder mittels eines externen Computers, erfolgen.

Außerdem kann die Wichtung der Abtastwerte auch so erfolgen, dass sie die Wirkung eines impulsformenden Filters hat und z.B. eine Gaussian-Minimum-Shift-Keying (GMSK)-Modulation bewirkt. Auf diese Weise können zusätzliche Filter eingespart werden.

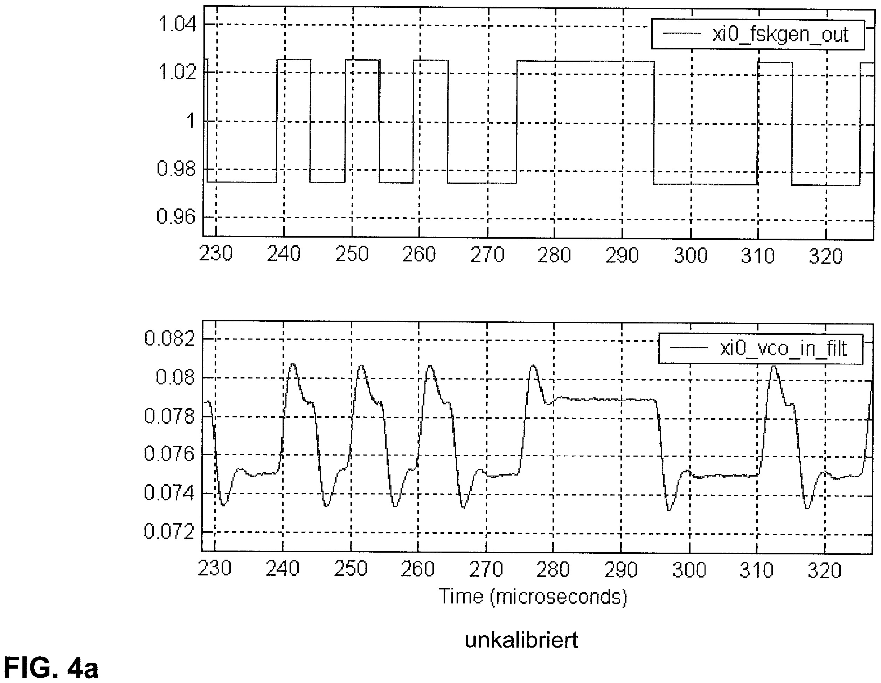

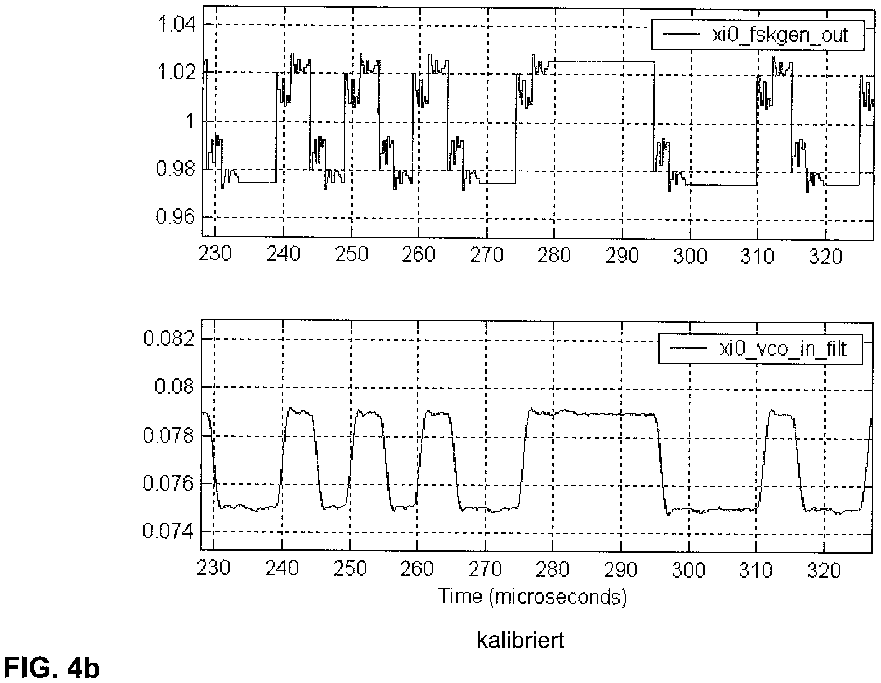

Fig. 4a und 4b zeigen das Ausgangssignal des Sendemoduls einmal im nichtkalibrierten Zustand (Fig. 4a unten) und einmal im kalibrierten Zustand (Fig. 4b unten). Fig. 4a zeigt oben das Nutzsignal mit ungewichteten Abtastwerten während Fig. 4b oben das Nutzsignal mit entsprechend der Kalibration gewichteten Abtastwerten zeigt. Die Wichtungen der einzelnen Abtastwerte sind Skalierungswerte für die einzelnen Abtastwerte, wie sich aus dem Vergleich der Figuren 4a und 4b, jeweils oben, ergibt.

Ohne Kalibration, d. h. mit gleichgewichteten (unskalierten) Abtastwerten des Nutzsignals, weist das modulierte Ausgangssignal des Sendemoduls signifikante Überschwingungen und Einschwingeffekte auf. Nach Kalibration und entsprechender (unterschiedlicher) Wichtung der Abtastwerte des Nutzsignals ergibt sich eine ausreichend flache Modulationsform des Ausgangssignals des Sendemoduls (siehe Fig. 4b unten). Nachdem die Skalierungsfaktoren für die Wichtung der einzelnen Abtastwerte auf die zuvor beschriebene Weise durch die Kalibrationseinheit 44 bestimmt wurden, werden die über eine Vorverzerrungseinheit 62 auf die ansonsten in üblicher Weise (Kodierung, Impulsformung) aufbereiteten Nutzsignale angewandt. Am Ausgang des Vorverzerrers der Vorverzerrungseinheit 62 liegt dann beispielsweise ein vorverzerrtes Nutzsignal an, wie es in Figur 4b, oben, dargestellt ist. Dieses vorverzerrte Nutzsignal wird dann mittels eines Multiplizierers 65 mit einem ebenfalls von der Kalibrationseinheit 44 bestimmten Korrekturfaktors für den Frequenzhub multipliziert und über einen Addierer 64 dem Steuereingang 18 des Fraktional-N-Synthesizers 10 zugeführt.

Im Unterschied zu anderen Ansätzen ist die Vorverzerrungseinheit 62 kein nichtrekursives Filter (Finite-Impulse-Response Filter, FIR Filter) und kein rekursives Filter (Infinite-Impulse-Response Filter, IIR Filter), welches jeweils einen hohen Rechenaufwand erfordern würde, sondern eine einfache Skalierungseinheit, für die die Skalierungsfaktoren der Abtastwerte (die Wichtungen) einfach aus einem Speicher ausgelesen werden können. Dazu sind keine weiteren arithmetischen Operationen erforderlich.

Bezugszeichenliste

| | |
|---|---|
| 10 | Fraktional-N-Synthesizer FNS |
| 12 | Signalausgang |
| 14 | Ausgangsverstärker |
| 16 | erster Eingang |
| 18 | Steuereingang |
| 20 | spannungsgesteuerter Oszillator (VCO) |
| 22 | Frequenzteiler $N_{VCO}$ |
| 24 | Multi-Modulus-Frequenzteiler MMD |
| 26 | Phasen-Frequenz-Detektor |
| 28 | Ladungspumpe CP |
| 30 | Tiefpassfilter LPF |
| 32 | Sigma-Delta-Modulator |
| 34 | Synchronisator |
| 40 | Kalibratorschaltung |
| 42 | Testempfänger |
| 44 | Kalibrationseinheit |
| 46 | Kanalsteuereingang |
| 50 | Sigma-Delta-Modulator SDM2 |
| 52 | Synchronisator |
| 54 | Multi-Modulus-Frequenzteiler MMD2 |
| 56 | Differenzierglied d/dt |
| 58 | Tiefpassfilter LPFA |
| 60 | Tiefpassfilter LPFB |
| 62 | Vorverzerrungseinheit |
| 64 | Addierer |
| 65 | Multiplizierer |

**Patentansprüche**

1. Sendemodul zum Übertragen von Daten in Form digitaler Nutzsignale durch Nutzsignale bestimmter Modulation eines Trägersignals mittels zwei- oder mehrstufiger Frequenzumtastung, enthaltend:

   - einen PLL-Schaltkreis mit einem spannungsgesteuerten Oszillator (20) und einem steuerbaren Frequenzteiler (24) mit einem Frequenzteilersteuereingang, wobei der PLL-Schaltkreis einen ersten Fraktional-N-Synthesizer (10) bildet,
   - eine Kalibratorschaltung (40),
   - eine Vorverzerrungs-Einheit (62),

   wobei das Sendemodul ausgebildet ist, eine direkte Frequenzumtastung, DFSK, des Trägersignals durch entsprechende Ansteuerung des Frequenzteilers (24) mit einem Frequenzteilersteuersignal zu bewirken, **dadurch gekennzeichnet, dass** das Sendemodul eine Modulationsdatenvorverarbeitungseinheit aufweist, die mit dem Frequenzteilersteuereingang verbunden und ausgebildet ist, Abtastwerte gleicher Polarität der zu übertragenden Nutzsignale zu wichten und das Frequenzteilersteuersignal, d.h. den Modulationsindex hinsichtlich des zu bewirkenden Frequenzhubs feinabzustimmen, und wobei die Kalibratorschaltung (40) dazu ausgebildet ist, zumindest ein erstes Steuersignal ($\vec{w}$) und ein zweites Steuersignal (dM) zu erzeugen, und die Vorverzerrungs-Einheit (62) dazu ausgebildet ist, aus dem ersten Steuersignal ($\vec{w}$), dem zweiten Steuersignal (dM) und den Nutzsignalen oder aufbereiteten Nutzsignalen ein Korrektursignal (dK') zu erzeugen, wobei das Sendemodul dazu ausgebildet ist, das Korrektursignal (dK') einem Steuereingang (18) des Fraktional-N-Synthesizers (10) zuzuführen.

2. Sendemodul nach Anspruch 1, wobei die Vorverzerrungs-Einheit (62) als Skalierungseinheit ausgebildet ist.

3. Sendemodul nach Anspruch 1 oder 2, wobei die Vorverzerrungs-Einheit (62) für die Erzeugung des Korrektursignals (dK') weiter dazu ausgebildet ist,

   - aus dem ersten Steuersignal ($\vec{w}$) und den Nutzsignalen oder aufbereiteten Nutzsignalen ein vorverzerrtes Nutzsignal zu erzeugen.

4. Sendemodul nach einem der Ansprüche 1 bis 3, wobei die Vorverzerrungs-Einheit (62) für die Erzeugung des Korrektursignals (dK') weiter dazu ausgebildet ist, aus dem zweiten Steuersignal (dM) einen Korrekturfaktor für den Frequenzhub zu erzeugen.

5. Sendemodul nach Anspruch 4, wobei die Vorverzerrungs-Einheit (62) für die Erzeugung des Korrektursignals (dK') weiter dazu ausgebildet ist, aus dem vorverzerrten Nutzsignal und dem Korrekturfaktor das Korrektursignal (dK') zu erzeugen.

6. Sendemodul nach mindestens einem der Ansprüche 1 bis 5, wobei die Vorverzerrungseinheit (62) dazu ausgebildet ist, das Korrektursignal (dK') durch Multiplikation zu erzeugen.

7. Sendemodul nach mindestens einem der Ansprüche 1 bis 6, **dadurch gekennzeichnet, dass** das Korrektursignal (dK') dem Steuereingang (18) des Fraktional-N-Synthesizers (10) über einen Addierer (64) zugeführt wird.

8. Sendemodul nach einem der Ansprüche 1 bis 7, **dadurch gekennzeichnet, dass** der Frequenzteiler (24) ein Multi-Modulus-Frequenzteiler (24) ist.

9. Sendemodul nach einem der Ansprüche 1 bis 8, **dadurch gekennzeichnet, dass** der PLL-Schaltkreis einen Signalausgang (12) zum Ausgeben eines modulierten Ausgangssignals aufweist, an den die Kalibratorschaltung (40) angeschlossen ist, die ausgebildet ist, aus einem jeweiligen modulierten Ausgangssignal Wichtungen für Abtastwerte eines jeweils zu übertragenden Nutzsignals sowie Korrekturwerte für das jeweilige Frequenzteilersteuersignal abzuleiten.

10. Sendemodul nach einem der Ansprüche 1 bis 9, **dadurch gekennzeichnet, dass** die Kalibratorschaltung (40) einen Testempfänger (42) aufweist, der als unmodulierter Fraktional-N-Synthesizer mit offener Regelschleife ausgebildet ist.

11. Sendemodul nach Anspruch 10, **dadurch gekennzeichnet, dass** der Testempfänger (42) einen Frequenzteiler aufweist, der dem Frequenzteiler des ersten Fraktional-N-Synthesizers (10) entspricht sowie einen Phasen-Frequenz-Detektor (26), der einem Phasen-Frequenz-Detektor (26) des ersten Fraktional-N-Synthesizers (10) entspricht.

12. Sendemodul nach einem der Ansprüche 10 oder 11, **dadurch gekennzeichnet, dass** die Kalibratorschaltung (40) eine Kalibrationseinheit (44) aufweist, die mit einem Ausgang des Testempfängers (42) verbunden ist und die ausgebildet ist, Wichtungen für Abtastwerte eines jeweils zu übertragenden Nutzsignals sowie Korrekturwerte für das jeweilige Frequenzteilersteuersignal zu bilden.

13. Sendemodul nach Anspruch 12, **dadurch gekennzeichnet, dass** die Kalibrationseinheit (44) ausgebildet ist, Wichtungen für einzelne Abtastwerte eines jeweils zu übertragenden Nutzsignals mittels eines vereinfachten Least-Mean-Square-Algorithmus' zu bestimmen.

**Claims**

1. A transmission module for transmitting data in the form of digital useful signals by modulation of a carrier signal, determined by useful signals, by means of two-step or multi-step frequency shift keying, said transmission module containing:

   - a PLL circuit having a voltage-controlled oscillator (20) and a controllable frequency divider (24) having a frequency divider control input, wherein the PLL circuit forms a first fractional-N synthesizer (10),
   - a calibrator circuit (40),
   - a precorrection unit (62),

   wherein the transmission module is designed to induce a direct frequency shift keying, DFSK, of the carrier signal by appropriate triggering of the frequency divider (24) with a frequency divider control signal,
   **characterized in that**
   the transmission module comprises a modulation data pre-processing unit, which is connected to the frequency divider control input and is designed to weight samples of the same polarity of the useful signals to be transmitted and to fine tune the frequency divider control signal, i.e. the modulation index, with regard to the frequency deviation to be induced, and wherein
   the calibrator circuit (40) is designed to generate at least one first control signal ($\vec{w}$) and a second control signal (dM), and the precorrection unit (62) is designed to generate a correction signal (dK') from the first control signal ($\vec{w}$), the second control signal (dM) and the useful signals or processed useful signals, wherein the transmission module is designed to feed the correction signal (dK') to a control input (18) of the fractional-N synthesizer (10).

2. The transmission module according to claim 1, wherein the precorrection unit (62) is formed as a scaling unit.

3. The transmission module according to claim 1 or 2, wherein the precorrection unit (62), for the generation of the correction signal (dK'), is also designed

   - to generate a precorrected useful signal from the first control signal ($\vec{w}$) and the useful signals or processed useful signals.

4. The transmission module according to any one of claims 1 to 3, wherein the precorrection unit (62), for the generation of the correction signal (dK'), is also designed to generate a correction factor for the frequency deviation from the second control signal (dM).

5. The transmission module according to claim 4, wherein the precorrection unit (62), for the generation of the correction signal (dK'), is also designed to generate the correction signal (dK') from the precorrected useful signal and the correction factor.

6. The transmission module according to at least any one of claims 1 to 5, wherein the precorrection unit (62) is designed to generate the correction signal (dK') by multiplication.

7. The transmission module according to at least one of claims 1 to 6, **characterized in that** the correction signal (dK') is fed to the control input (18) of the fractional-N synthesizer (10) via an adder (64).

8. The transmission module according to any one of claims 1 to 7, **characterized in that** the frequency divider (24) is a multi-modulus frequency divider (24).

9. The transmission module according to any one of claims 1 to 8, **characterized in that** the PLL circuit has a signal output (12) for outputting a modulated output signal, the calibrator circuit (40) being connected to said signal output and being designed to derive, from a particular modulated output signal, weightings for samples of a useful signal that is to be transmitted and also correction values for the corresponding frequency divider control signal.

10. The transmission module according to any one of claims 1 to 9, **characterized in that** the calibrator circuit (40) has a test receiver (42), which is formed as an unmodulated fractional-N synthesizer with open control loop.

11. The transmission module according to claim 10, **characterized in that** the test receiver (42) has a frequency divider which corresponds to the frequency divider of the first fractional-N synthesizer (10), and also a phase frequency detector (26), which corresponds to a phase frequency detector (26) of the first fractional-N synthesizer (10).

12. The transmission module according to any one of claims 10 or 11, **characterized in that** the calibrator circuit (40) comprises a calibration unit (44), which is connected to an output of the test receiver (42) and which is designed to form weightings for samples of each useful signal to be transmitted and also correction values for the corresponding frequency divider control signal.

13. The transmission module according to claim 12, **characterized in that** the calibration unit (44) is designed to determine weightings for individual samples of a useful signal that is to be transmitted, by means of a simplified least-mean-square algorithm.

**Revendications**

1. Module d'émission pour la transmission de données sous forme de signaux utiles numériques par modulation de signaux utiles donnés d'un signal de porteuse au moyen d'une modulation par déplacement de fréquences à deux ou plusieurs étapes, contenant :

   - un circuit en boucle à phase asservie PLL avec un oscillateur (20) commandé par une tension et un diviseur de fréquences (24) pouvant être commandé avec une entrée de commande de diviseur de fréquence, où le circuit en boucle à phase asservie PLL forme un premier synthétiseur N fractionnaire (10),
   - un circuit calibreur (40),
   - une unité de pré-distorsion (62),

   où le module d'émission est conçu pour provoquer une modulation de fréquence directe DFSK du signal de porteuse par une commande correspondante du diviseur de fréquence (24) avec un signal de commande de diviseur de fréquence,
   **caractérisé en ce**
   **que** le module d'émission présente une unité de prétraitement de données de modulation qui est reliée avec l'entrée de commande de diviseur de fréquence et est conçue pour pondérer des valeurs d'échantillonnage de même polarité des signaux utiles à transmettre, et pour harmoniser de manière subtile le signal de commande de diviseur de fréquence, c'est-à-dire l'indice de modulation, vis-à-vis du décalage de fréquence à réaliser, et où
   le circuit calibreur (40) est conçu de manière à générer au moins un premier signal de commande ($\vec{w}$) et un deuxième signal de commande (dM), et l'unité de pré-distorsion (62) est conçue pour générer, à partir du premier signal de commande ($\vec{w}$), du deuxième signal de commande (dM) et des signaux utiles ou des signaux utiles préparés, un signal de correction (dK'),
   où le module d'émission est conçu pour amener le signal de correction (dK') jusqu'à une entrée de commande (18) du synthétiseur N fractionnaire (10).

2. Module d'émission selon la revendication 1, dans lequel l'unité de pré-distorsion (62) est conçue en tant qu'unité de mise à l'échelle.

3. Module d'émission selon la revendication 1 ou 2, dans lequel l'unité de pré-distorsion (62) pour la génération du signal de correction (dK') est en outre conçue

   - pour générer un signal utile pré-distordu à partir du premier signal de commande (w) et des signaux utiles ou des signaux utiles préparés.

4. Module d'émission selon l'une des revendications 1 à 3, dans lequel l'unité de pré-distorsion (62) pour la génération du signal de correction (dK') est en outre conçue pour générer à partir du deuxième signal de commande (dM) un facteur de correction pour le décalage de fréquence.

5. Module d'émission selon la revendication 4, dans lequel l'unité de pré-distorsion (62) pour la génération du signal de correction est conçu en outre pour générer à partir du signal utile pré-distordu et du facteur de correction le signal de correction (dK').

6. Module d'émission selon au moins l'une des revendications 1 à 5, dans lequel l'unité de pré-distorsion (62) est conçue pour générer le signal de correction (dK') par une multiplication.

7. Module d'émission selon au moins l'une des revendications 1 à 6, **caractérisé en ce que** le signal de correction (dK') est amené jusqu'à l'entrée de commande (18) du synthétiseur N fractionnaire (10) par l'intermédiaire d'un additionneur (64).

8. Module d'émission selon l'une des revendications 1 à 7, **caractérisé en ce que** le diviseur de fréquence (24) est un diviseur de fréquence multi modules (24).

9. Module d'émission selon l'une des revendications 1 à 8, **caractérisé en ce que** le circuit en boucle à phase asservie PLL présente une sortie de signal (12) pour délivrer un signal de sortie modulé, auquel est associé le circuit calibreur (40), qui est conçu pour déduire à partir du signal de sortie modulé respectif des pondérations pour des valeurs d'échantillonnage d'un signal utile à transmettre respectivement, ainsi que des valeurs de correction pour le signal de commande de diviseur de fréquence respectif

10. Module d'émission selon l'une des revendications 1 à 9, **caractérisé en ce que** le circuit calibreur (40) présente un récepteur de test (42) qui est conçu en tant que synthétiseur N fractionnaire avec une boucle de commande ouverte.

11. Module d'émission selon la revendication 10, **caractérisé en ce que** le récepteur de test (42) présente un diviseur de fréquence qui correspond au diviseur de fréquence du premier synthétiseur N fractionnaire (10), ainsi qu'un détecteur de fréquence et de phase (26) qui correspond à un détecteur de phase et de fréquence (26) du premier synthétiseur N fractionnaire (10).

**12.** Module d'émission selon l'une des revendications 10 ou 11, **caractérisé en ce que** le circuit calibreur (40) présente une unité de calibration (44) qui est reliée avec une sortie du récepteur de test (42) et qui est conçue pur former des pondérations pour des valeurs d'échantillonnage d'un signal utile à transmettre respectivement, ainsi que pour former des valeurs de correction pour le signal de commande de diviseur de fréquence respectif.

**13.** Module d'émission selon la revendication 12, **caractérisé en ce que** l'unité de calibration (44) est conçue pour déterminer des pondérations pour des valeurs d'échantillonnage individuelles d'un signal utile à transmettre respectivement au moins d'un algorithme des moindres carrés simplifié.

IQ-Modulator

FIG. 1

FIG. 2

FIG. 3

unkalibriert

**FIG. 4a**

EP 2 214 364 B1

kalibriert

**FIG. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030118143 A1
- US 20080095269 A1
- US 20060261906 A1